# FASCICULE DE BREVET EUROPEEN

(11) **EP 1 194 689 B1**
(45) Date de publication et mention de la délivrance du brevet: **16.03.2005**
(21) Numéro de dépôt: 00942000.1
(22) Date de dépôt: 29.05.2000
(51) Int. Cl.: F02M 25/08, F02M 37/10

(54) **RESERVOIR A CARBURANT**
KRAFTSTOFFBEHÄLTER
FUEL TANK

(30) Priorité: 01.06.1999 BE 9900382
(43) Date de publication de la demande: 10.04.2002
(73) Titulaire: Inergy Automotive Systems Research (SA), 1120 Bruxelles (BE)
(72) Inventeur: GERARD, Yannick, B-1950 Kraainem (BE); LEONARD, Stephane, B-1070 Bruxelles (BE); VAN SCHAFTINGEN, Jules-Joseph, B-1300 Wavre (BE); WOUTERS, Paul, B-1800 Vilvoorde (BE); PEREZ, Rufino, B-1600 St Pieters Leeuw (BE)
(74) Mandataire: Decamps, Alain René François
(86) Numéro de dépôt international: PCT/EP2000/004924
(87) Numéro de publication internationale: WO 2000/073644

(56) Documents cités:
- EP-A- 0 554 928
- DE-A- 3 704 641
- US-A- 3 910 302
- US-A- 4 852 761
- US-A- 5 036 823
- US-A- 5 579 740

## Description

La présente invention concerne un réservoir à carburant.

Les réservoirs à carburant liquide ou gazeux actuels doivent satisfaire à un ensemble de normes de sécurité en raison du caractère très inflammable et souvent toxique du carburant qu'ils contiennent. Les fuites de carburant par défaut d'étanchéité ainsi que les pertes par évaporation ont tout particulièrement fait l'objet de réglementations de plus en plus contraignantes, notamment pour les applications dans les véhicules automobiles. En plus du réservoir proprement dit, un grand nombre d'accessoires qui lui sont associés peuvent aussi contenir du carburant, par exemple : les canalisations, raccords divers, pompes, filtres, canisters d'élimination des vapeurs, dispositifs et clapets de sécurité, ... Ces accessoires contribuent souvent de manière non négligeable aux fuites de carburant en tous genres. Parfois même, ils sont responsables de la majorité des pertes de carburant du système global qui les comprend en même temps que le réservoir auquel ils sont associés.

On a donc cherché, parallèlement à la diminution des fuites occasionnées par le réservoir lui-même, à minimiser aussi celles directement causées par chacun de ces accessoires ainsi que par leurs dispositifs d'interconnexion.

On connaît par le brevet US-4,852,761 un réservoir muni d'un canister de rétention des vapeurs de carburant disposé à l'intérieur du réservoir et comprenant un clapet de sécurité empêchant la sortie de liquide du réservoir en cas de retournement de celui-ci. Cette disposition permet la suppression du conduit de liaison du réservoir au canister et le raccourcissement du conduit reliant le dispositif de récupération des vapeurs au remplissage avec ce même canister.

Selon cet état de la technique, le canister n'est toutefois pas associé à un dispositif ISR et les risques de pertes évaporatives dues aux liaisons de ce dispositif avec le canister ne sont pas négligeables. En outre, la complexité du montage de ce canister intégré au réservoir et du dispositif ISR indépendant reste élevée. Il en va de même pour d'autres dispositifs remplissant les autres fonctions qui se rencontrent souvent dans les systèmes à carburant impliquant la présence d'un réservoir (ORVR, OBD,...).

Par ailleurs, dans le canister décrit dans le brevet US-4,852,761, le niveau maximum de carburant admissible dans le réservoir est relativement bas, étant donné la nécessité de ne pas dépasser le niveau fixé par la position de l'orifice situé à l'extrémité inférieure du tube incliné interne au canister et destiné au retour du carburant liquide dans le réservoir, sous peine d'inhiber la séparation du carburant liquide d'avec les vapeurs. Enfin, un canister de ce type peut se trouver noyé par le carburant en cas d'inclinaison exagérée du réservoir, alors que la vanne fermant le réservoir en cas de retournement est restée ouverte, en raison de la persistance d'une force de gravité résultante qui maintient toujours la pièce dense du clapet dans sa position basse. Il peut dans cette situation en résulter des fuites de carburant liquide hors du réservoir ainsi qu'une cessation de l'activité de rétention des gaz de carburant par la composition garnissant le canister.

L'invention a pour but de remédier aux inconvénients des réservoirs connus en fournissant un réservoir qui annule ou limite très fortement les fuites de carburant liquide et gazeux vers l'atmosphère extérieure, tout en assurant les fonctions de sécurité généralement accomplies par les systèmes à carburant modernes et en simplifiant très fort la complexité du montage du réservoir.

A cet effet l'invention concerne un réservoir à carburant comprenant un canister renfermant une composition capable de retenir les vapeurs de carburant, selon lequel le canister est associé à un dispositif d'interdiction de sur-remplissage (ISR) du réservoir situé aussi, au moins en partie, à l'intérieur de ce réservoir.

Par réservoir, on entend une enceinte fermée, de formes diverses, généralement étanche vis-à-vis de l'extérieur, qui peut être équipé de divers accessoires internes ou traversant la paroi de l'enceinte.

Le réservoir selon l'invention peut être réalisé en toute composition ou matière compatible avec les carburants et les conditions habituelles d'utilisation. Il peut être réalisé, par exemple, en un matériau dont la composition comprend au moins un métal ou une matière plastique. Les réservoirs composés d'au moins une matière plastique sont préférés.

Par matière plastique, on entend toute matière polymérique de synthèse se présentant à l'état solide dans les conditions ambiantes. Les réservoirs en matière plastique selon l'invention peuvent se présenter sous la forme de réservoirs mono- ou multi-couches. Les réservoirs comprenant une ou de plusieurs couches de polyéthylène haute densité sont particulièrement préférés.

Par carburant, on désigne toute composition chimique capable de pouvoir être brûlée en présence d'un comburant, généralement l'oxygène de l'air, qui peut être utilisée dans un moteur thermique. Les carburants peuvent se présenter à température ambiante sous un quelconque des trois états solide, liquide ou gazeux. Dans les véhicules, on préfère généralement les carburants qui sont liquides ou gazeux à température ordinaire et sous pression atmosphérique ou supérieure. Les carburants liquides tels que l'essence et le gasoil sont tout particulièrement préférés.

Le carburant contenu dans le réservoir selon l'invention est destiné à être brûlé dans tout dispositif de combustion mettant en oeuvre un comburant tel que l'air ou l'oxygène comme, par exemple, les chaudières de chauffage ou les moteurs thermiques. Le plus souvent, il alimente un moteur thermique d'un véhicule. Par moteur thermique, on désigne tout moteur convertissant l'énergie chimique contenue dans un carburant en énergie mécanique. Il peut s'agir de tout type de moteur à combustion interne, à pistons ou rotatif, à carburant liquide (comme, par exemple : essence, fuel, alcool...) ou gazeux (comme, par exemple : gaz de pétrole, gaz naturel, gaz pauvre, hydrogène, méthane, ...). Par extension, on entend également désigner par moteur thermique un ou plusieurs moteurs électriques alimenté par au moins une pile à combustible dans le cas où ce combustible comprend au moins un hydrocarbure et/ou un alcool.

Le canister compris dans le réservoir selon l'invention est un réceptacle contenant une composition, généralement solide et granulée, capable de retenir les vapeurs de carburant d'un courant gazeux. Comme exemple d'une telle composition, on peut citer le charbon actif granulé. Le canister peut être réalisé en toute matière ou composition de matières compatible avec les carburants liquides et gazeux avec lesquels il est destiné à entrer en contact prolongé dans les conditions de température et de pression variées susceptibles de se rencontrer à l'intérieur des réservoirs à carburant. De préférence, le canister est réalisé, au moins partiellement en matière plastique.

Le vocable "matière plastique" a le même sens que ci-dessus. Les matières thermoplastiques et thermodurcissables conviennent bien. Les matières thermoplastiques ont donné de bons résultats. Selon l'invention, le canister est compris dans le réservoir, c'est-à-dire qu'il est disposé totalement ou partiellement à l'intérieur de celui-ci. De préférence, il est disposé totalement à l'intérieur du réservoir.

Lorsqu'il est disposé totalement dans le réservoir, le canister peut être fixé au réservoir par tout moyen de fixation connu. Des exemples de fixation possible sont, non limitativement : paroi inférieure, latérale ou supérieure commune avec une paroi du réservoir, paroi inférieure, latérale ou supérieure soudée avec une paroi du réservoir, excroissance d'une paroi du canister boulonnée à une paroi ou à une pièce interne solidaire d'une paroi du réservoir, enclipsage d'une paroi du canister dans une ou plusieurs glissières portées par ou creuséés dans une paroi interne du réservoir.

Lorsqu'il est disposé partiellement dans le réservoir, le canister pénètre une paroi du réservoir, par exemple la paroi supérieure. Dans ce cas, il est de préférence fermé de manière étanche par un couvercle portant les canalisations d'entrée des gaz contenant les vapeurs à épurer et de sortie des gaz propres. Il est de plus avantageux que le couvercle soit réalisé au moyen d'au moins un matériau quasi imperméable aux carburants.

Conformément à l'invention, le canister est associé à un dispositif d'interdiction de sur-remplissage du réservoir.

Par dispositif ISR, on entend tout dispositif dont la fonction est de fixer le volume utile du réservoir et d'empêcher, pendant l'opération de remplissage, le dépassement d'un niveau prédéterminé de liquide dans le réservoir. Il peut être choisi parmi tous les dispositifs connus pour remplir cette fonction. Le dispositif ISR particulier à bille dense obturant par gravité le conduit de sortie des gaz d'une capacité destinée à recueillir du carburant liquide a donné de bons résultats. Il est tout particulièrement intéressant lorsque les vapeurs de carburant sont évacuées par l'extrémité extérieure au réservoir de la tubulure de remplissage.

Le dispositif ISR est, selon l'invention, situé lui aussi, au moins en partie, à l'intérieur du réservoir. L'expression "au moins en partie à l'intérieur" a ici le sens de disposé totalement ou partiellement dans le réservoir, au même titre que ce qui a été explicité plus haut à propos du canister.

Deux autres dispositifs ISR particuliers conformes au réservoir selon l'invention sont le dispositif ISR à flotteur et le dispositif ISR comprenant un couple pièce dense-ressort dont la position suit le niveau de carburant

Le dispositif ISR est associé au canister, c'est-à-dire qu'il collabore avec ce dernier en vue d'assurer la sécurité globale du réservoir vis-à-vis de l'environnement. Ce dispositif peut être associé au canister de diverses manières. Il peut constituer un dispositif distinct de celui-ci, l'association résultant seulement de l'existence d'un ou de plusieurs moyens de communication avec ce dernier, tel que, par exemple, une conduite de liaison, un conducteur électrique, un organe de liaison mécanique ou, au contraire partager ou mettre en commun avec le canister un élément essentiel du canister et/ou du dispositif ISR, tel qu'une paroi ou un volume intérieur.

De préférence, le dispositif ISR partage au moins un élément essentiel avec le canister. De manière particulièrement préférée, le dispositif ISR partage avec le canister au moins une paroi commune.

Par paroi commune, on entend une paroi servant indifféremment au canister ou au dispositif ISR. Cette paroi commune peut résulter de l'assemblage, préalable à leur utilisation ou après incorporation dans le réservoir, par exemple par soudure ou collage, d'une paroi du canister avec une paroi du dispositif ISR. Alternativement, la paroi commune peut aussi venir directement de la fabrication, par exemple par moulage, d'un dispositif complexe qui engloberait à la fois le canister et le dispositif ISR.

Ce dispositif ISR peut également être fixé au réservoir d'une manière semblable à celle décrite *supra* pour le canister. Il peut aussi, en variante, être fixé uniquement au canister par tout moyen connu. Dans une autre variante, il peut, à la fois, être fixé au réservoir et au canister.

Dans une première forme de réalisation particulière du réservoir conforme à l'invention, le canister est aussi associé à un dispositif de séparation liquide-vapeur qui est situé, au moins en partie, à l'intérieur du réservoir.

Par dispositif de séparation liquide-vapeur, on entend tout dispositif capable de retenir le carburant liquide qui accompagnerait par entraînement un courant gazeux chargé de vapeurs de carburant. Il désigne tout particulièrement un dispositif quelconque capable de retenir les gouttelettes de carburant liquide entraînées avec les gaz comprenant des vapeurs de carburant qui sortiraient du réservoir. Il peut être réalisé en tout matériau compatible avec les carburants. Un dispositif de séparation liquide-vapeur en matière thermoplastique donne de bons résultats.

Selon cette forme de réalisation particulière du réservoir selon l'invention, le canister est associé au dispositif de séparation liquide-vapeur.

Le vocable "associé" a ici la même signification que celle explicitée ci-dessus à propos du dispositif ISR.

Le dispositif de séparation liquide-vapeur est disposé, dans cette forme de réalisation, au moins en partie à l'intérieur du réservoir. L'expression "au moins en partie à l'intérieur" a ici la même signification que la même expression déjà explicitée *supra* pour le dispositif ISR.

Selon une deuxième forme de réalisation du réservoir selon l'invention, le canister est associé à un dispositif de fermeture de la mise à l'air du réservoir en cas de retournement ("ROV" ou "Roll-Over-Valve") qui est situé, au moins en partie, à l'intérieur du réservoir.

Dans cette deuxième forme de réalisation, de même que dans toutes les autres formes qui seront évoquées *infra,* les définitions des termes "associé" et "au moins en partie à l'intérieur" sont encore les mêmes que celles déjà explicitées ci-dessus.

Le dispositif ROV a pour fonction d'éviter les fuites de carburant liquide par le réservoir, en cas d'écartement progressif ou au contraire, très rapide, de la position du réservoir par rapport à sa position normale pour laquelle il a été conçu. Un exemple est celui d'un réservoir solidaire d'un mobile qui gravit une pente raide, ou encore un réservoir embarqué, partie intégrante d'un système subissant un renversement brutal.

Un cas particulier du réservoir conforme à l'invention, est celui selon l'une ou l'autre des deux formes de réalisation décrites plus haut dans laquelle le réservoir comporte un dispositif de séparation liquide-vapeur et un dispositif ROV. De préférence, le réservoir est simultanément conforme aux deux formes de réalisation décrites plus haut; en d'autres termes, le canister est associé avec chacun des deux dispositifs qui sont disposés tous les deux, au moins en partie, à l'intérieur du réservoir.

De manière plus préférée encore, le dispositif de séparation liquide-vapeur est situé au-dessus du dispositif ROV. Cette disposition offre l'avantage d'un retour facilité, par simple gravité, du liquide retenu dans le premier dispositif vers l'intérieur du réservoir, via la vanne du dispositif ROV, ouverte en cas de position normale du réservoir.

De manière la plus préférée, le dispositif de séparation liquide-vapeur présente, dans ce cas particulier de réservoir, au moins une des formes suivantes :
- entonnoir;
- spirale;
- système à parois multiples formant chicanes.

Les formes spirale et chicane ont pour but d'imposer des changements abrupts de direction au courant gazeux, de manière à provoquer la condensation, la coalescence et la rétention de gouttelettes de carburant liquide.

Dans le cas de l'entonnoir, le carburant liquide séparé du courant gazeux est recueilli par gravité au point bas de l'entonnoir. Il peut ainsi avantageusement être retourné facilement dans le réservoir.

On peut avantageusement associer plusieurs des formes évoquées ci-dessus dans un même dispositif de séparation.

Selon une troisième forme de réalisation du réservoir conforme à l'invention, le canister est associé à un dispositif de récupération des vapeurs de carburant lors du remplissage du réservoir ("ORVR" ou "On board Refuelling Vapour Recovery") qui est, lui aussi, situé au moins en partie, à l'intérieur du réservoir.

Un tel dispositif ORVR a pour fonction de veiller au respect de l'environnement en retenant les vapeurs de carburant qui sont émises pendant que l'on procède au remplissage périodique du réservoir. Il est un des deux moyens généralement adoptés pour résoudre le problème de la captation des vapeurs émises pendant le remplissage, l'autre étant indépendant du réservoir et consistant à équiper la pompe distributrice de carburant de la station-service d'un système d'aspiration des vapeurs.

Tout dispositif ORVR compatible avec le carburant et les conditions régnant dans le réservoir et susceptible de pouvoir être associé au canister peut convenir. Ce dispositif peut être réalisé en divers matériaux, par exemple ceux qui comprennent au moins une matière plastique. Tous les types de matières plastiques, thermoplastiques ou thermodurcissables conviennent. Les matériaux thermoplastiques ont donné de bons résultats.

Les dispositifs ORVR préférés sont ceux qui sont capables de capter la totalité des vapeurs générées lors d'une opération de remplissage d'un réservoir vide de carburant jusqu'à son niveau maximum. Un tel système peut, par exemple, être associé à un canister comprenant une quantité de matière retenant les vapeurs de carburant suffisante pour capter la totalité des vapeurs générées durant cette opération.

Selon une quatrième forme de réalisation du réservoir conforme à l'invention, le canister est associé à au moins un capteur de pression d'un dispositif de diagnostic embarqué ("OBD" ou "On Board Diagnostic") qui est situé, au moins en partie, à l'intérieur du réservoir.

Des systèmes de diagnostic embarqués sont de plus en plus fréquemment montés dans les systèmes à carburant comprenant un réservoir. Ils ont pour but de faciliter les tests de ces systèmes lors de leur montage, ainsi qu'en cours d'utilisation, afin de pouvoir contrôler leurs caractéristiques et leur conformité aux diverses normes de sécurité et environnementales qu'ils sont supposés respecter.

Ces systèmes sont basés sur la collecte de données fournies par une série de capteurs disposés en des endroits précis du système à carburant. En particulier, ils comprennent souvent un ou plusieurs capteurs de pression.

Selon l'invention, au moins un de ces capteurs de pression est associé au canister et est situé, au moins en partie, à l'intérieur du réservoir. Selon une cinquième forme de réalisation du réservoir conforme à l'invention, le canister est associé à au moins un accessoire situé, au moins en partie, à l'intérieur du réservoir.

Par accessoire, on entend désigner tout organe en général par lequel transite du carburant ou est en contact avec du carburant et qui remplit une fonction particulière propre au système à carburant, en ce compris une fonction de transport de carburant entre deux autres organes.

De préférence, selon cette forme de réalisation, on associe le canister à au moins un des accessoires suivants, la liste n'étant pas limitative :
- une jauge à carburant;
- une connexion électrique aboutissant à une jauge à carburant;
- une pompe à carburant;
- une capacité vidangeable pour recueillir du carburant liquide;
- une connexion électrique d'alimentation du moteur d'une pompe à carburant;
- une canalisation à carburant aboutissant à un dispositif d'alimentation d'un moteur thermique;
- une jauge de pression.

Une combinaison quelconque d'au moins deux accessoires peut être utilisée, éventuellement en présence de plusieurs exemplaires d'un même accessoire.

Selon une sixième forme de réalisation du réservoir conforme à l'invention, le canister pénètre une paroi du réservoir via un orifice fermé par un couvercle surmontant le canister et en contact, du côté intérieur de celui-ci, avec une composition chimique capable de retenir les vapeurs de carburant.

Le couvercle du canister ferme de préférence l'orifice de la paroi du réservoir d'une manière étanche aux liquides et aux gaz dans les conditions de pression et de température qui règnent habituellement dans un réservoir à carburant.

De préférence, ce couvercle comprend au moins une matière plastique imperméable aux hydrocarbures. Un couvercle ayant donné de bons résultats est réalisé en matière thermoplastique imperméable. Des exemples de telles matières plastiques imperméables aux hydrocarbures sont, de manière non limitative, les polyéthylène téréphtalates, les polyamides, les polycétones, les polyacétals et les structures multicouches comprenant, par exemple, au moins une couche de polyéthylène haute densité et éventuellement une couche barrière vis-à-vis des hydrocarbures.

L'étanchéité de la fermeture de l'orifice du réservoir par le couvercle peut être assurée par tout moyen d'assemblage possible. Elle peut, par exemple, être assurée par l'utilisation d'un joint étanche entre le couvercle et le réservoir. Dans le cas d'un couvercle en matière plastique et lorsque le réservoir est lui-même réalisé aussi en matière plastique, l'étanchéité de la fermeture de l'orifice du réservoir est avantageusement obtenue par soudage du couvercle du canister à la paroi du réservoir.

La composition chimique capable de retenir les vapeurs de carburant a la même définition que la composition, généralement solide et granulée, définie plus haut comme composition apte à garnir le volume intérieur du canister.

Selon une septième forme de réalisation, une variante intéressante consiste à faire entrer une partie de la tubulure de remplissage dans le réservoir de façon à l'associer au canister. Il est ainsi possible de préassembler l'ensemble canister-tubulure de remplissage par tout moyen connu de manière à pouvoir monter cet ensemble en une seule opération dans/sur le réservoir.

Dans la configuration où le canister est situé totalement à l'intérieur du réservoir, il est également intéressant d'associer au canister la totalité des canalisations et connexions destinées à sortir du réservoir.

Dans cette septième forme de réalisation, le vocable "associer" a le même sens que celui décrit plus haut à propos du dispositif ISR.

Lorsque le canister est situé en partie à l'extérieur du réservoir, une autre variante avantageuse consiste à rassembler dans la partie extérieure au réservoir la totalité des canalisations et connexions aboutissant au réservoir. De cette façon, celui-ci ne comporte plus d'autre orifice que celui destiné au canister.

Selon une huitième forme de réalisation du réservoir conforme à l'invention, le canister peut être associé à une électrovanne du circuit de purge de ce canister. Le vocable "associé" a encore ici le même sens que précédemment.

On peut aussi avantageusement combiner deux ou plusieurs des formes de réalisation particulières évoquées *supra.*

Une combinaison préférée est celle dans laquelle un clapet CRSMFCV est intégré à un canister placé dans un réservoir. Le clapet CRSMFCV (Clapet Réservoir Sur-remplissage Multi-Fonctions à Capacité Vidangeable) combine les fonctions ROV, ventilation du réservoir, ISR et séparation liquide-vapeur.

L'invention concerne aussi un réservoir conforme à l'un de ceux décrits ci-dessus et destiné à être monté sur un véhicule automobile. Par véhicule automobile, on désigne les véhicules mus par un moteur thermique tels que les camions, voitures et motocyclettes.

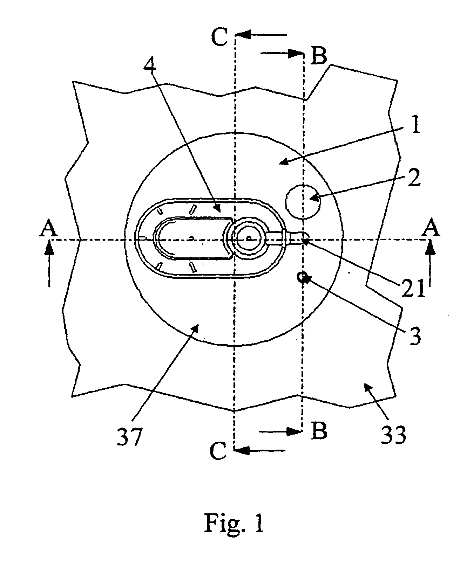

Les figures 1 à 4 qui suivent sont données dans le but d'illustrer l'invention, sans en restreindre sa portée.

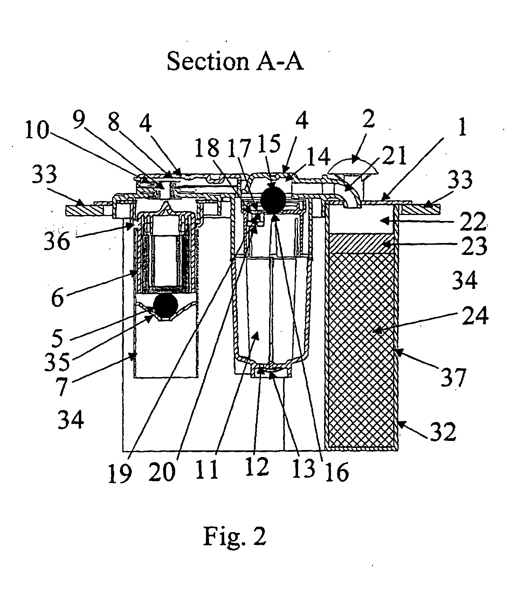

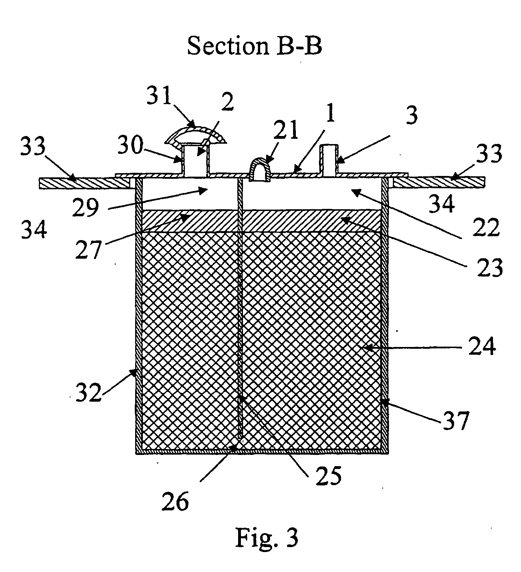

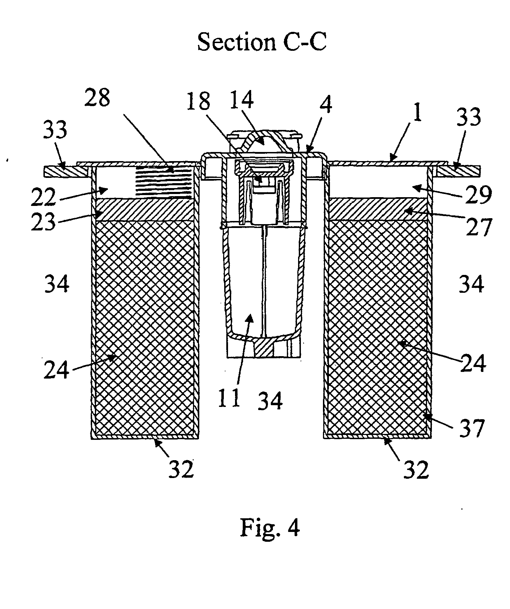

Ces figures représentent une vue en plan (figure 1) d'un canister conforme à un réservoir pour véhicule automobile selon l'invention et 3 vues en élévation du même canister correspondant à des coupes effectuées selon les axes AA (figure 2), BB (figure 3) et CC (figure 4), tels que dessinés à la figure 1.

Dans ces figures, un couvercle de forme circulaire (1) en PA d'un canister (37) réalisé en PEHD comporte un orifice de mise à l'air (2), une pipette de purge (3) ainsi qu'une tête d'un clapet multifonctions (4) à capacité vidangeable (11) et est soudé sur la paroi d'un réservoir en PEHD (33). Ce clapet comprend une bille dense en acier (5) surmontée par un flotteur (6), l'ensemble bille-flotteur se trouvant à l'intérieur d'une pièce tubulaire (7) en forme de jupe dans laquelle le flotteur (6) coulisse librement. La bille dense (5) repose sur un fond ajouré (35) en forme de cône tronqué renversé, solidaire de la jupe (7) et situé à mi-hauteur environ de celle-ci. La jupe (7), le fond ajouré (35) et le flotteur (6) sont réalisés en polyacétal. Un passage (36) situé dans le haut de la jupe (7), en un point situé à proximité du couvercle (1), assure la communication entre l'intérieur du réservoir (34) et l'intérieur de la jupe (7). Celle-ci est fixée à la tête de clapet (4) par enclipsage. Surmontant le flotteur (6), dans la tête de clapet (4), se trouve un passage (9) délimité par un joint en matériau élastomère (10) et reliant l'intérieur du clapet à un conduit (8) situé dans la tête du clapet, au-dessus du niveau de la paroi du réservoir (33). Le sommet du flotteur (6) possède une forme capable d'obturer le passage (9) lorsqu'elle est en contact avec le joint (10). Le canal (8) débouche dans une cavité (11) solidaire elle aussi du couvercle (1). A la base de la cavité (11) se trouve un passage (12) fermé par un joint en forme de parapluie renversé (13). Une deuxième cavité (14) surmonte la cavité (11) et est reliée à celle-ci par un passage obturé par une bille dense en acier (16) permettant la fermeture du réservoir lorsque celui-ci est en position de repos proche de l'horizontale. A proximité immédiate de la bille (16), se trouve un deuxième passage de taille plus réduite (17) communiquant lui-même avec une petite cavité (18) qui contient une bille dense de petite dimension (19). Un autre passage (20) relie la petite cavité (18) à la cavité principale (11). La cavité supérieure (14) se prolonge par la canalisation (21) intégrée au couvercle (1) et qui aboutit dans une autre cavité (22) située sous la pipette de purge (3). Cette dernière cavité (22) surmonte un lit de granules de charbon actif (24) protégé par une couche de mousse souple en polyuréthane (23) perméable aux gaz. Une paroi (25) sépare le lit de granules (24) en deux zones et laisse un passage libre (26) entre sa base et le fond du canister(37) qui permet la communication entre les deux zones. Au sommet du lit (24) sont également disposés des protections (23) et (27) en mousse souple de polyuréthane, de part et d'autre de la paroi (25). Les protections (23) et (27) sont maintenues en place au-dessus du lit de granules (24) à l'aide de ressorts métalliques dont un seul est illustré (28), pour raison de clarté. Une cavité (29), symétrique de la cavité (22), se trouve au-dessus de la protection (27), sous l'orifice de mise à l'air (2). Cet orifice (2) se compose lui-même d'une pipette (30) surmontée d'un chapeau de protection (31). Les granules (24), la paroi (25), les protections en mousse de polyuréthane (23) et (27) ainsi que les cavités (22) et (29) sont contenus à l'intérieur d'un réceptacle (32) en PEHD fermé hermétiquement par le couvercle (1). Les parties du canister (37) extérieures au réceptacle (32) et à la cavité principale (11) sont en libre communication avec l'intérieur du réservoir (34).

Le fonctionnement du canister décrit ci-dessus est le suivant : lorsque le réservoir est dans une position normale de repos, la phase gazeuse surmontant le carburant liquide présent dans le réservoir est en communication avec l'air libre via le passage (36), éventuellement via l'espace entre la jupe (7) et le flotteur (6) et via le passage (9), le canal (8), la cavité (11), la petite cavité (18), la cavité (14), la canalisation (21), la cavité (22), le lit de charbon actif (24), la cavité (29) et la pipette (30). Si l'atmosphère gazeuse interne au réservoir se met, pour une raison quelconque, en surpression modérée et que le niveau de carburant liquide reste inférieur à un seuil critique situé sous le niveau du passage (36), la ventilation du réservoir se fera par échappement d'une partie des gaz via ce passage (36) et le chemin décrit ci-dessus pour aboutir à l'air libre, après retenue des vapeurs de carburant dans le charbon actif (24). Dans cette situation, le flotteur (6) reste suffisamment bas pour laisser ouvert le passage (9). Si du carburant liquide venait à être entraîné avec le courant gazeux, ou si des condensations se produisent, ils seront retenus dans la capacité (11). Lorsque le niveau de carburant liquide retenu dans la capacité (11) dépasse un certain poids critique, le joint (13) s'ouvre et le liquide retourne dans le réservoir (34).

Dans le cas d'une surpression à l'intérieur du réservoir alors que le niveau de carburant liquide dépasse un certain seuil critique, le flotteur (6) monte et ferme le passage (9), le passage (36) pouvant éventuellement se trouver noyé sous le carburant, empêchant ainsi l'entrée de grandes quantités de liquide dans le canal (8), le remplissage de la cavité (11), l'immersion du lit de charbon actif (24) et la fuite de carburant hors du réservoir.

En cas de retournement accidentel du réservoir, la bille (5) sort de son logement et vient pousser par effet de gravité sur le flotteur (6), bloquant aussi toute fuite de liquide hors du réservoir.

Lorsque le véhicule automobile sur lequel est monté le réservoir reste immobile en position proche de l'horizontale et que la surpression dans le réservoir reste modérée, la bille dense (15) repose sur son siège et obture le passage (16), tandis que l'atmosphère gazeuse de la cavité (11) communique avec le canal (14) via le passage étroit (17) et la ventilation se poursuit alors normalement comme expliqué plus haut.

Dans le cas d'une surpression importante dans le réservoir, telle que celle qui se produit, par exemple, lors du remplissage du réservoir, le gaz sous pression contenant les vapeurs de carburant entre par le passage (20), pousse la bille (19) qui monte dans la cavité (18) et vient bloquer le passage (17) de manière à fermer le réservoir.

Dans le cas d'une dépression à l'intérieur du réservoir alors que celui-ci reste immobile en position proche de l'horizontale, la bille (19) redescend dans la cavité (18). Cette dernière a une forme intérieure telle que lorsque la bille (19) a atteint son point le plus bas, le passage (20) reste néanmoins toujours ouvert.

Dans le cas où le véhicule est en mouvement, la bille dense (15) quitte son siège et vient ouvrir le passage (16) ce qui permet une communication directe avec la cavité (14) et la canalisation (21).

## Revendications

1. Réservoir à carburant comprenant un canister (37) enfermant une composition (24) capable de retenir les vapeurs de carburant, **caractérisé en ce que** le canisterer (37) est associé à un dispositif d'interdiction de sur-remplissage (ISR) du réservoir situé aussi, au moins en partie, à l'intérieur de ce réservoir.

2. Réservoir selon la revendication précédente, **caractérisé en ce que** le dispositif ISR a au moins une paroi commune avec le canister (37).

3. Réservoir selon une quelconque des revendications précédentes, **caractérisé en ce que** le caniste (37) associé à un dispositif de séparation liquide-vapeur situé, au moins en partie, à l'intérieur du réservoir.

4. Réservoir selon une quelconque des revendications précédentes, **caractérisé en ce que** le canister (37) est associé à un dispositif de fermeture de la mise à l'air du réservoir en cas de retournement (ROV) qui est situé, au moins en partie, à l'intérieur du réservoir:

5. Réservoir selon les revendications 3 et 4, **caractérisé en,ce que** le dispositif de séparation liquide-vapeur est situé au-dessus du dispositif ROV et présente au moins une des formes suivantes :
• entonnoir
• spirale
• système à parois multiples formant chicanes.

6. Réservoir selon une quelconque des revendications précédentes, **caractérisé en ce que** le canister (37) est associé à un dispositif de récupération des vapeurs de carburant lors du remplissage qui est situé, au moins en partie, à l'intérieur du réservoir.

7. Réservoir selon une quelconque des revendications précédentes, **caractérisé en ce que** le canister (37) est associé à au moins un capteur de pression d'un dispositif de diagnostic embarqué qui est situé, au moins en partie, à l'intérieur du réservoir.

8. Réservoir selon une quelconque des revendications précédentes, **caractérisé en ce que** le caniste (37) associé à au moins un accessoire situé, au moins en partie, à l'intérieur du réservoir et choisi parmi ceux qui suivent :
• une jauge à carburant;
• une connexion électrique aboutissant à une jauge à carburant;
• une pompe à carburant;
• une capacité vidangeable pour recueillir du carburant liquide;
• une connexion électrique d'alimentation du moteur d'une pompe à carburant;
• une canalisation à carburant aboutissant à un dispositif d'alimentation d'un moteur thermique;
• une jauge de pression;
• une partie de la tubulure de remplissage;
• une électrovanne du circuit de purge du canister.

9. Réservoir selon une quelconque des revendications précédentes, **caractérisé en ce que** le canister (37) penètre une paroi du réservoir via un orifice fermé par un couvercle surmontant le canister (37) et en contact, du côté intérieur de celui-ci, avec une composition chimique capable de retenir les vapeurs de carburant.

10. Utilisation d'un réservoir selon une quelconque des revendications précédentes dans un véhicule automobile.

## Patentansprüche

1. Kraftstoffbehälter mit einem Kanister (37), der eine Zusammensetzung (24) enthält, die befähigt ist, Kraftstoffdämpfe zurückzuhalten, **dadurch gekennzeichnet, daß** der Kanister (37) einer Vorrichtung zur Verhinderung eines Überfüllens (ISR) des Behälters zugeordnet ist, die sich zumindest zum Teil ebenfalls im Behälter befindet.

2. Kraftstoffbehälter nach dem vorhergehenden Anspruch, **dadurch gekennzeichnet, daß** die Vorrichtung (ISR) zumindest eine gemeinsame Wand mit dem Kanister (37) hat.

3. Kraftstoffbehälter nach einem der vorhergehenden Ansprüche, **dadurch gekennzeichnet, daß** der Kanister (37) einer Vorrichtung zum Trennen Flüssigkeit/Dampf zugeordnet ist, die zumindest zum Teil im Inneren des Behälters angeordnet ist.

4. Kraftstoffbehälter nach einem der vorhergehenden Ansprüche, **dadurch gekennzeichnet, daß** der Kanister (37) einer Vorrichtung (ROV) zum Verschließen der Entlüftung des Behälters im Falle eines Wendens zugeordnet ist, die zumindest zum Teil im Inneren des Behälters angeordnet ist.

5. Kraftstoffbehälter nach den Ansprüchen 3 und 4, **dadurch gekennzeichnet, daß** die Vorrichtung zum Trennen Flüssigkeit/Dampf oberhalb der Vorrichtung ROV angeordnet ist und zumindest eine der folgenden Formen hat:
· trichterförmig
· spiralförmig
· System mit mehreren Wänden, die Schikanen bilden.

6. Kraftstoffbehälter nach einem der vorhergehenden Ansprüche, **dadurch gekennzeichnet, daß** der Kanister (37) einer Vorrichtung zum Auffangen der Kraftstoffdämpfe beim Befüllen zugeordnet ist, die sich zumindest zum Teil im Inneren des Behälters befindet.

7. Kraftstoffbehälter nach einem der vorhergehenden Ansprüche, **dadurch gekennzeichnet, daß** der Kanister (37) zumindest einen Druckfühler einer Diagnosevorrichtung zugeordnet ist, die sich zumindest zum Teil im Inneren des Behälters befindet.

8. Kraftstoffbehälter nach einem der vorhergehenden Ansprüche, **dadurch gekennzeichnet, daß** der Kanister (37) zumindest einem Accessoire zugeordnet ist, das zumindest zum Teil im Inneren des Behälters angeordnet und aus der folgenden Gruppe gewählt ist:
· ein Kraftstoffpegelmesser;
· eine elektrische Verbindung, die zu einem Kraftstoffpegelmesser führt;
· eine Kraftstoffpumpe;
· ein entleerbarer Aufnahrneraum für flüssigen Kraftstoff;
· eine elektrische Anschlußverbindung eines Kraftstoffpumpenmotors;
· eine Kraftstoffleitung, die in einer Speisevorrichtung eines Wärmekraftmotors mündet;
· ein Druckfühler;
· ein Teil eines Füllrohres;
· ein Elektroventil für einen Spülkreis des Kanisters.

9. Kraftstoffbehälter nach einem der vorhergehenden Ansprüche, **dadurch gekennzeichnet, daß** der Kanister (37) eine Wand des Behälters über eine durch einen Deckel verschlossene Öffnung durchdringt, wobei der Deckel den Kanister (37) überlagert und auf seiner Innenseite mit einer chemischen Zusammensetzung in Kontakt ist, die befähigt ist, Kraftstoffdämpfe aufzunehmen.

10. Verwendung eines Kraftstoffbehälters nach einem der vorhergehenden Ansprüche in einem Automobilfahrzeug.

## Claims

1. Fuel tank comprising a canister containing a composition capable of retaining fuel vapours, **characterized in that** the canister is associated with an overfill prevention (OP) device preventing the tank from being overfilled and also located, at least partially, inside this tank.

2. Tank according to the preceding claim, **characterized in that** the OP device has at least one wall in common with the canister.

3. Tank according to any one of the preceding claims, **characterized in that** the canister is associated with a liquid-vapour separating device located, at least partially, inside the tank.

4. Tank according to any one of the preceding claims, **characterized in that** the canister is associated with a device (ROV) for shutting off the tank breather in the event of the tank rolling over and which is located, at least partially, inside the tank.

5. Tank according to Claims 3 and 4, **characterized in that** the liquid-vapour separating device is situated above the ROV device and has at least one of the following forms:
· funnel
· spiral
· system of multiple walls forming a labyrinth.

6. Tank according to any one of the preceding claims, **characterized in that** the canister is associated with a device for recovering fuel vapours during filling and which is located, at least partially, inside the tank.

7. Tank according to any one of the preceding claims, **characterized in that** the canister is associated with at least one pressure sensor of an on-board diagnostic device which is located, at least partially, inside the tank.

8. Tank according to any one of the preceding claims, **characterized in that** the canister is associated with at least one accessory located, at least partially, inside the tank and chosen from the following:
■ a fuel gauge,
■ an electrical connection leading to a fuel gauge,
■ a fuel pump,
■ a drainable volume for collecting liquid fuel,
■ an electrical connection for powering a fuel pump motor,
■ a fuel line leading to a device supplying a combustion engine,
■ a pressure gauge,
■ part of the filling pipe,
■ an electrically operated valve in the canister bleed circuit.

9. Tank according to any one of the preceding claims, **characterized in that** the canister penetrates a wall of the tank via an orifice closed by a cover surmounting the canister and in contact, on the inside thereof, with a chemical composition capable of retaining fuel vapours.

10. Use of a tank according to any one of the preceding claims in a motor vehicle.
